# EUROPEAN PATENT SPECIFICATION

(11) **EP 2 523 812 B1**
(45) Date of publication and mention of the grant of the patent: **11.03.2015**
(21) Application number: 11701419.1
(22) Date of filing: 11.01.2011
(51) Int. Cl.: B41N 10/04

(54) **THERMOPLASTIC POLYURETHANE FOR PRINTING BLANKETS**
THERMOPLASTISCHES POLYURETHAN FÜR DRUCKTÜCHER
POLYURÉTHANE THERMOPLASTIQUE POUR BLANCHETS D'IMPRESSION

(30) Priority: 11.01.2010 US 293825 P
(43) Date of publication of application: 21.11.2012
(73) Proprietor: Lubrizol Advanced Materials, Inc., Cleveland, OH 44141-3247 (US)
(72) Inventor: MELTZER, Donald A., Akron Ohio 44333 (US); VONTORCIK, JR., Joseph J., Broadview Heights Ohio 44147 (US)
(74) Representative: Von Kreisler Selting Werner - Partnerschaft von Patentanwälten und Rechtsanwälten mbB
(86) International application number: PCT/US2011/020723
(87) International publication number: WO 2011/085336

(56) References cited:
- EP-A1- 1 174 459
- WO-A1-01/10950
- WO-A1-2008/021845
- WO-A2-2009/094332
- GB-A- 2 089 288
- JP-A- 2005 349 800
- US-A1- 2008 070 042

## Description

### FIELD OF THE INVENTION

The present invention relates to printing blankets that are made utilizing a soft thermoplastic polyurethane composition that exhibits excellent compression set and excellent resistance to certain solvents, such as naphthenic mineral spirits. It is particularly beneficial to utilize the thermoplastic polyurethane composition in the printing surface layer of the printing blankets of this invention.

### BACKGROUND OF THE INVENTION

One of the most common commercial printing processes is offset lithography. In this printing process, ink is offset from a printing plate to a rubber-surfaced printing blanket or cylindrical sleeve mounted on a blanket cylinder before being transferred to a substrate, such as paper. Typically, the printing blanket or sleeve includes at least one base layer comprised of metal or fabric, and a printing surface layer formed from a polymeric rubber material that is adapted to carry and transfer liquid printing ink. The blanket or sleeve also typically includes an intermediate compressible layer. United States Patent Application Publication No. 2008/0070042 A1 discloses a printing blanket or sleeve including thermoplastic polyurethane or thermoplastic polyurethane alloy layers. GB 2 089 288 A discloses a multilayer printing blanket comprising a compressible layer of elastomeric polyurethane.

Most printing surface layers currently in use typically comprise natural or synthetic rubber materials which require the use of a solvent to dissolve the rubber material so that it may be coated, in numerous thin passes, onto the base layer. The solvent should be evaporated after each pass and prior to curing. Alternatively, the natural or synthetic rubber materials may be calendered onto the base layer in a single pass, but at great expense due to the need to adequately control gauge, evaporate the solvent and recover the volatile material. In both methods, the rubber must be cured under pressure, which is a time consuming process.

Compressible layers currently in use are typically comprised of materials such as synthetic rubbers, rubber blends, and cast urethane, which have been processed into a cellular, or foam, form containing voids. Again, the use of rubbers typically requires the use of solvents to dissolve the rubber material for processing, which must then be evaporated prior to curing. Cast urethanes can also present complications in processing as their pot life must be carefully controlled, and this can lead to difficulty in mixing, casting and curing.

As the compressible layer allows positive displacement of the printing surface layer without causing distortion of the image, the compressible layer must exhibit good recovery from impact in order to be effective. Generally, the ability of the blanket to resist permanent compression determines its useful life, thus the compressible layer is typically the layer that limits the longevity of the blanket. As such, it would be desirable to form a compressible layer with materials that improve the ability of the compressible layer to resist permanent compression set and subsequently, improve the longevity of the printing blanket.

Accordingly, there is a need in the art for an image transfer product such as a printing blanket or sleeve formed from layers which may be easily processed without the need for solvents, which provides the desired gauge and texture for printing, and which exhibits resistance to permanent compression.

### SUMMARY OF THE INVENTION

The present invention provides an offset printing blanket or sleeve including one or more layers that are made with a soft thermoplastic polyurethane composition that provides excellent compression set and excellent resistance to apolar solvents, such as naphthenic mineral spirits. The thermoplastic polyurethane can potentially be utilized in the base layer; the compressible layer, the printing surface layer and/or the image reinforcement layer of such printing blankets or sleeves. The thermoplastic polyurethane is utilized in the compression layer and/or the printing surface layer and is most typically utilized in the printing surface layer. The use of this thermoplastic polyurethane composition provides an advantage over previously used polymeric rubber materials because the thermoplastic polyurethane composition is supplied and processed without the need for solvents.

The subject invention more specifically reveals a printing blanket comprising: a base layer; a compressible layer, and a printing surface layer, wherein the compressible layer and/or the printing surface layer is comprised of a thermoplastic polyurethane composition, wherein the thermoplastic polyurethane composition made by reacting (a) at least one polyester polyol intermediate with (b) at least one diisocyanate and (c) at least one chain extender; wherein the polyester polyol intermediate comprises an intermediate derived from at least one dialkylene glycol and at least one dicarboxylic acid or an ester or anhydride thereof. It is particularly beneficial to utilize the thermoplastic polyurethane composition in the printing surface layer of the printing blankets of this invention.

### BRIEF DESCRIPTION OF THE DRAWINGS

FIG. 1 is a perspective view of a printing blanket including a compressible layer that is comprised of a thermoplastic polyurethane (TPU).
FIG. 2 is a cross-section of a printing sleeve including a TPU base layer, a TPU compressible layer, and a TPU printing surface layer.

### DETAILED DESCRIPTION OF THE INVENTION

The thermoplastic polyurethane (TPU) polymers used in manufacturing the printing blankets of this invention are made by reaction of three reactants. The first reactant is a polyester polyol intermediate, the second reactant is a diisocyanate, and the third reactant is a chain extender.

### The Polyester Polyol Intermediate

The polyester polyol intermediate utilized in the synthesis of the TPU utilized in making the printing blankets of the present invention is derived from at least one dialkylene glycol (the other glycols may or may not be dialkylene and could be alkylene) and at least one dicarboxylic acid, or an ester or anhydride thereof. While it is desirable to contain 2 terminal hydroxyl groups, most desirable 2 primary hydroxyl groups, these polyester polyol intermediates may include at least one terminal hydroxyl group, and in some embodiments, at least one terminal hydroxyl group and one or more carboxylic acid groups. The polyester polyol intermediates are generally a substantially linear, or linear, polyester having a number average molecular weight (Mₙ) which is within the range of about 500 to about 10,000, more typically about 1000 to about 4000, and generally from about 1200 to about 3000. In many cases the polyester polyol will have a number average molecular weight which is within the range of 1500 to 2500.

In some embodiments, the polyester polyol intermediate may have a low acid number, such as less than 1.5, less than 1.0, or even less than 0.8. A low acid number for the polyester polyol intermediate may generally provide improved hydrolytic stability in the resulting TPU polymer. The acid number may be determined by ASTM D-4662 and is defined as the quantity of base, expressed in milligrams of potassium hydroxide that is required to titrate acidic constituents in 1.0 gram of sample. Hydrolytic stability can also be improved by adding hydrolytic stabilizers to the TPU which are known to those skilled in the art of formulating TPU polymers.

Dialkylene glycols suitable for use in preparing the polyester polyol intermediate of the present invention may be aliphatic, cyclo-aliphatic, aromatic, or combinations thereof. Suitable dialkylene glycols typically contain from 2 to 20 carbon atoms, more typically contain from 2 to 14 carbon atoms, and most typically contain from 2 to 8 carbon atoms. In many cases the dialkylene glycol will contain from 2 to 4 carbon atoms. However, the dialkylene glycol can contain from 4 to 12 carbon atoms or 4 to 8 carbon atoms. Some representative examples of dialkylene glycols that can be utilized in making the polyester polyol intermediate include oxydimethanol, diethylene glycol, dipropylene glycol, 3,3-oxydipropan-1-ol, dibutylene glycol, or combinations thereof. In other embodiments, one or more of the dialkylene glycols listed may be excluded from the present invention. Blends of two or more glycols may be used. In some embodiments, monoalkylene glycols may be used in combination with the dialkylene glycols described above. In other embodiments, the glycol used to prepare the polyester polyol intermediate is free of monoalkylene glycols.

Dicarboxylic acids suitable for use in preparing the polyester polyol intermediate of the present invention may be aliphatic, cyclo-aliphatic, aromatic, or combinations thereof. Suitable dicarboxylic acids typically contain from 2 to about 20 carbon atoms. For instance, the dicarboxylic acid can contain from 4 to 16 carbon atoms or the dicarboxylic acid can contain from 6 to 12 carbon atoms. Some representative examples of dicarboxylic acids that can be used include succinic acid, glutaric acid, adipic acid, pimelic acid, suberic acid, azelaic acid, sebacic acid, dodecanedioc acid, isophthalic acid, terephthalic acid, cyclohexane dicarboxylic acid, or combinations thereof. In one embodiment of this invention, one or more of the dicarboxylic acids listed above are intentionally excluded from those utilized in synthesizing the polyester polyol intermediate.

The polyester polyol intermediates of the present invention may also be derived from an ester or anhydride of one or more the dicarboxylic acids described above or combinations of such materials. Suitable anhydrides include succinic anhydride, alkyl and/or alkenyl succinic anhydride, phthalic anhydride and tetrahydrophthalic anhydride.

The polyester polyol intermediates of the present invention are prepared by reacting one or more of the dialkylene glycol described above with one or more of the dicarboxylic acids described above, and/or one or more of the esters or anhydrides thereof. In some embodiments, more than one equivalent of glycol is used for each equivalent of acid. The preparation includes (1) an esterification reaction of one or more dialkylene glycols with one or more dicarboxylic acids or anhydrides or (2) by transesterification reaction, i.e., the reaction of one or more dialkylene glycols with esters of dicarboxylic acids. Mole ratios generally in excess of more than one mole of glycol to acid are preferred so as to obtain linear chains having a preponderance of terminal hydroxyl groups.

In one embodiment of this invention, the polyester polyol intermediate is used in combination with one or more other polyester polyol intermediates (that is one or more polyester polyol intermediates derived from polyols other than those described above). As used herein, the polyester polyol intermediates of the present invention may include a mixture of ester and ether linkages, but may not contain only ether linkages or, in some embodiments, more than 70% ether linkages. In other embodiments, the compositions of the present invention are substantially free, or free of, polyether polyol intermediates, and such materials are not used in the preparation, where polyether polyol intermediates as used herein can mean intermediates containing only ether linkages, or containing less than 50, 40, 20, or even 15 percent ester linkages.

### The Diisocyanate

The second reactant used in synthesizing the TPU is a diisocyanate. Suitable diisocyanates include: (i) aromatic diisocyanates such as: 4,4'-methylenebis-(phenyl isocyanate) (MDI), m-xylylene diisocyanate (XDI), phenylene-1,4-diisocyanate, 1,5-naphthalene diisocyanate, diphenylmethane-3,3'-dimethoxy-4,4'-diisocyanate (TODI), and toluene diisocyanate (TDI); as well as (ii) aliphatic diisocyanates such as: isophorone diisocyanate (IPDI), 1,4-cyclohexyl diisocyanate (CHDI), decane-1,10-diisocyanate, hexamethylene diisocyanate (HDI), bis(isocynanatomethyl) cyclohexane (CHMDI) and dicyclohexylmethane-4,4'-diisocyanate (HMDI). In some embodiments, the diisocyanate is 4,4'-methylenebis(phenyl isocyanate) (MDI). In other embodiments, one or more of the diisocyanates listed are excluded.

A mixture of two or more diisocyanates can be used. Also, small amounts of isocyanates having a functionality greater than 2, such as tri-isocyanates can be used together with the diisocyanates. Large amounts of isocyanates with a functionality of 3 or more should be avoided because they will cause crosslinking of the TPU polymer.

### The Chain Extender

Suitable chain extenders include glycols and can be aliphatic, aromatic or combinations thereof. In some cases, the chain extenders are glycols having from 2 to about 20 carbon atoms. In some embodiments, the glycol chain extenders are lower aliphatic or short chain glycols having from about 4 to about 12 carbon atoms and include, for instance: diethylene glycol, dipropylene glycol, 1,4-butanediol, 1,6-hexanediol, 1,3-butanediol, 1,5-pentanediol, 1,4-cyclohexanedimethanol, neopentyglycol, 1,9-nonanediol, 1,12-dodecanediol and the like. In some embodiments, the chain extender is comprised solely of 1,6-hexanediol.

Aromatic glycols may also be used as the chain extender to make the TPU including benzene glycol and xylene glycol. Xylene glycol is a mixture of 1,4-di(hydroxymethyl)benzene and 1,2-di(hydroxymethyl)benzene. Benzene glycol specifically includes hydroquinone bis(beta-hydroxyethyl)ether (HQEE), 1,3-di(2-hydroxyethyl)benzene; 1,2-di(2-hydroxyethoxy)benzene, and combinations thereof.

In one embodiment the chain extender is preferably an aromatic glycol while in another embodiment a mixture of two or more glycols may be used as the chain extender in TPU of this invention. In other embodiments, one or more of the chain extenders listed may be excluded from the present invention.

Diamines may also be used as a chain extender, as is well known in the art. In one embodiment of the present invention, the chain extender contains a diamine as a co-chain extender in combination with one or more of the chain extenders described above. In other embodiments the present invention does not use any diamines in the preparation of its compositions.

### The Process of Making the TPU

The three reactants (the polyester polyol intermediate, the diisocyanate, and the chain extender) are reacted together to form the high molecular weight TPU of this invention. Any known processes to react the three reactants may be used to make the TPU. In one embodiment, the process is a so-called "one-shot" process where all three reactants are added to an extruder reactor and reacted. The equivalent weight amount of the diisocyanate to the total equivalent weight amount of the hydroxyl containing components, that is, the polyester polyol intermediate and the chain extender glycol, can be from about 0.95 to about 1.10, or from about 0.96 to about 1.02, and even from about 0.97 to about 1.005. Reaction temperatures utilizing a urethane catalyst can be from about 150°C to about 245°C, and in other embodiment from 170°C to 220°C.

Generally, any conventional catalyst can be utilized to react the diisocyanate with the polyester polyol intermediates or the chain extender. Examples of suitable catalysts include the various alkyl amines, alkyl ethers or alkyl thiol ethers of bismuth or tin wherein the alkyl portion has from 1 to about 20 carbon atoms with specific examples including bismuth octoate, bismuth laurate, and the like. Preferred catalysts include the various tin catalysts such as stannous octoate, dibutyltin dioctoate, dibutyltin dilaurate, and the like. The amount of such catalyst is generally small, such as from about 20 to about 200 parts per million based upon the total weight of the polyurethane forming reactants.

The TPU can also be prepared utilizing a pre-polymer process. In the pre-polymer route, the polyester polyol intermediates are reacted with generally an equivalent excess of one or more diisocyanates to form a pre-polymer solution having free or unreacted diisocyanate therein. The reaction is generally carried out at temperatures of from about 80°C to about 220°C, or from about 150°C to about 200°C in the presence of a suitable urethane catalyst. Subsequently, the chain extender, as noted above, is added in an equivalent amount generally equal to the isocyanate end groups as well as to any free or unreacted diisocyanate compounds. The overall equivalent ratio of the total diisocyanate to the total equivalent of the hydroxyl terminated polyesters and the chain extender is thus from about 0.95 to about 1.10, or from about 0.96 to about 1.02 and even from about 0.97 to about 1.05. The chain extension reaction temperature is generally from about 150°C to about 245°C, or from about 170°C to about 220°C. Typically, the pre-polymer route can be carried out in any conventional device including an extruder. In such embodiments, the polyester polyol intermediates are reacted with an equivalent excess of a diisocyanate in a first portion of the extruder to form a pre-polymer solution and subsequently the chain extender is added at a downstream portion and reacted with the pre-polymer solution. Any conventional extruder can be utilized, including extruders equipped with barrier screws having a length to diameter ratio of at least 20 and in some embodiments at least 25.

In one embodiment, the ingredients are mixed in a single or twin screw extruder with multiple heat zones and multiple feed ports between its feed end and its die end. The ingredients may be added at one or more of the feed ports and the resulting TPU composition that exits the die end of the extruder may be pelletized.

In some embodiments, component (a), the polyester polyol intermediate includes poly(diethylene glycol adipate), component (b), the diisocyanate includes 4,4'-methylenebis-(phenyl isocyanate), and component (c), the chain extender includes butanediol, HQEE (hydroquinone bis(2-hydroxyethyl)ether), or combinations thereof.

The TPU may have a hardness of at least 60 or 70 Shore A units, as measured by ASTM D-2240. The TPU may have a tensile strength of at least 10, 15, 17 or even 17.9 MPa and an ultimate elongation of more than 300%, 500% or even 600% as measured by ASTM D-412. The TPU may have a Graves tear value of at least 5, or 5.6 kg/mm, as measured by ASTM D-624, using die C. The composition may have a Taber loss, per H-18/1000 revolutions, of not more than, or less than, 100, 50, 40, or even 35 mg, as measured by ASTM D-3389 or D4060-95. The composition may have a weight average molecular weight of from 60,000 to 500,000 or from 80,000 to 300,000. The composition may have a melt flow index of less than 50, 40 or even 35 grams per 10 minutes, as measured by ASTM D-1238 Procedure A at a barrel temperature of 190°C and a 3.8 kg piston load.

### Additional Additives

The TPU compositions utilized in making the printing blankets of the present invention may further include additional useful additives in appropriate amounts. These optional additional additives include opacifying pigments, colorants, mineral and/or inert fillers, stabilizers including light stabilizers, lubricants, UV absorbers, processing aids, antioxidants, antiozonants, and other additives as desired. Useful opacifying pigments include titanium dioxide, zinc oxide, and titanate yellow. Useful tinting pigments include carbon black, yellow oxides, brown oxides, raw and burnt sienna or umber, chromium oxide green, cadmium pigments, chromium pigments, and other mixed metal oxide and organic pigments. Useful fillers include diatomaceous earth (such as Superfloss® diatomaceous earth antiblock additive from Celite Corporation of Lompoc, CA 93438), clay, silica, talc, mica, wallostonite, barium sulfate, and calcium carbonate. If desired, useful stabilizers such as antioxidants can be used and include phenolic antioxidants and organic phosphates. Useful lubricants include metal stearates, paraffin oils and amide waxes. Useful UV absorbers include 2-(2'-hydroxyphenol) benzotriazoles and 2-hydroxybenzophenones. Additives can also be used to improve the hydrolytic stability of the TPU polymer. Each of these optional additional additives described above may be present in, or excluded from, the compositions of the present invention.

When present, these additional additives will be included at conventional levels that are typically within the range of 0.01 weight percent to 5 weight percent and more typically 0.1 weight percent to about 2 weight percent based upon the total weight of the TPU composition. These ranges may apply separately to each additional additive present in the composition or to the total of all additional additives present. Such additives may be added during the reaction to form the TPU, but are normally added in a subsequent compounding step.

### Polymer Containing Blends

The TPU polymers of the present invention may be blended with a second (additional) polymer to form a polymer blend. Suitable second polymers as defined herein can be a homopolymer or a copolymer. The second polymer may be a blend of other polymers, and may further include any additional additives, such as antidegradents, fillers, processing aids, pigments, colorants, lubricants, and antifungal and antimicrobial agents.

The second polymer may include:
(i) a polyolefin (PO), such as polyethylene (PE), polypropylene (PP), butyl rubber, polybutene, ethylene propylene rubber (EPR), EPDM, nitrile rubber (NBR), polyoxyethylene (POE), cyclic olefin copolymer (COC), or combinations thereof;
(ii) a styrenic, such as polystyrene (PS), acrylonitrile butadiene styrene (ABS), styrene acrylonitrile (SAN), styrene butadiene rubber (SBR or HIPS), polyalphamethylstyrene, methyl methacrylate styrene (MS), styrene maleic anhydride (SMA), styrene-butadiene copolymer (SBC) (such as styrene-butadiene-styrene copolymer (SBS) and styrene-ethylene/butadiene-styrene copolymer (SEBS)), styrene-ethylene/propylene-styrene copolymer (SEPS), styrene butadiene latex (SBL), SAN modified with ethylene propylene diene monomer (EPDM) and/or acrylic elastomers (for example, PS-SBR copolymers), or combinations thereof;
(iii) a thermoplastic polyurethane (TPU);
(iv) a polyamide, such as Nylon™, including polyamide 6,6 (PA66), polyamide 1,1 (PA11), polyamide 1,2 (PA12), a copolyamide (COPA), or combinations thereof;
(v) an acrylic polymer, such as polymethyl acrylate, polymethylmethacrylate, or combinations thereof;
(vi) a polyvinylchloride (PVC), a chlorinated polyvinylchloride (CPVC), or combinations thereof;
(vii) a polyoxymethylene, such as polyacetal;
(viii) a polyester, such as polyethylene terephthalate (PET), polybutylene terephthalate (PBT), copolyesters and/or polyester elastomers (COPE) including polyether-ester block copolymers such as glycol modified polyethylene terephthalate (PETG) polylactic acid (PLA), or combinations thereof;
(ix) a polycarbonate (PC), a polyphenylene sulfide (PPS), a polyphenylene oxide (PPO), or combinations thereof;
or combinations thereof.

Polyvinyl chloride (PVC), vinyl polymer, or vinyl polymer material, as used herein, refers to homopolymers and copolymers of vinyl halides and vinylidene halides and includes post halogenated vinyl halides such as CPVC. Examples of these vinyl halides and vinylidene halides are vinyl chloride, vinyl bromide, vinylidene chloride and the like. The vinyl halides and vinylidene halides may be copolymerized with each other or each with one or more polymerizable olefinic monomers having at least one terminal CH₂=C< grouping. As examples of such olefinic monomers there may be mentioned the alpha,beta-olefinically unsaturated carboxylic acids, such as acrylic acid, methacrylic acid, ethyl acrylic acid, alpha-cyano acrylic acid, and the like; esters of acrylic acid, such as methyl acrylate, ethyl acrylate, butyl acrylate, octyl acrylate, cyanoethyl acrylate, hydroxyethyl acrylate, and the like; esters of methacrylic acid, such as methyl methacrylate, butyl methacrylate, hydroxyethyl methacrylate, and the like; nitriles, such as acrylonitrile, methacrylonitrile, and the like; acrylamides, such as methyl acrylamide, N-methylol acrylamide, N-butyoxy methylacrylamide, and the like; vinyl ethers, such as ethyl vinyl ether, chloroethyl vinyl ether, and the like; the vinyl ketones; styrene and styrene derivatives, such as .alpha.-methyl styrene, vinyl toluene, chlorostyrene, and the like; vinyl naphthalene, allyl and vinyl chloroacetate, vinyl acetate, vinyl pyridine, methyl vinyl ketone; the diolefins, including butadiene, isoprene, chloroprene, and the like; and other polymerizable olefinic monomers of the types known to those skilled in the art. In one embodiment, the base polymer includes polyvinyl chloride (PVC) and/or polyethylene terephthalate (PET).

The TPUs used in manufacturing the printing blankets of this invention are soft, offer solvent resistance, have excellent resistance against compression set and tensile set. For instance, the TPU utilized typically offers a tensile set at 200% strain of less than 20%, preferably less than 15%, and most preferably less than 10% when tested at 23°C in accordance with ASTM D412. They also offer high tensile strengths of over 1000 psi (6.9 x 10⁶ Pascals) and elongations to break of greater than 500%. The TPU will also preferable have a tensile strength of greater than 1500 psi (1.0 x 10⁷ Pascals) and will most preferably exhibit a tensile strength of greater than 2000 psi (1.4 x 10⁷ Pascals).

### Printing Blankets

According to one aspect of the present invention, a printing blanket or sleeve is provided comprising at least a base layer, a compressible layer, and a printing surface layer, wherein the printing surface layer is comprised of the thermoplastic polyurethane composition. The TPU can optionally be alloyed with a nitrile rubber, COPA, COPE or PVC.

In one embodiment of the invention, the base layer of the blanket or sleeve may comprise a fabric, a metal, or a polymeric material. In another embodiment, the base layer may comprise a thermoplastic polymer or thermoplastic polymer alloy. The compressible layer may comprise a rubbery polymeric material. In a preferred embodiment of this invention, the compressible layer is comprised of the TPU or an alloy of the TPU.

In accordance with another aspect of the invention, a printing blanket or sleeve is provided comprising a base layer comprising the TPU or an alloy thereof, and a printing surface layer comprising a thermoplastic polymer or thermoplastic polymer alloy. The printing blanket or sleeve may further include a compressible layer positioned between the base layer and the printing surface layer, where the compressible layer comprises a thermoplastic polymer or a thermoplastic polymer alloy and may have voids therein. In this embodiment, the printing surface layer preferably comprises a thermoplastic polymer alloy, and more preferably, a thermoplastic polymer/nitrile alloy.

The printing blanket or sleeve of this embodiment may further include an image reinforcement layer positioned below the printing surface layer. The image reinforcement layer may comprise a fabric, the TPU, or an alloy of the TPU. Preferably, the image reinforcement layer comprises a TPU having a Shore A hardness which is greater than the Shore A hardness of the printing surface layer. Preferably, the image reinforcement layer has a Shore A hardness of between about 55 to 95.

The printing blanket or sleeve of this embodiment may further include one or more reinforcing fabric layers positioned between the base layer and the printing surface layer. Where an image reinforcement layer is included in the construction, the reinforcing fabric layer is preferably positioned below the image reinforcement layer. According to another aspect of the invention, a method of making a printing blanket or sleeve including a compressible layer is provided comprising providing a base substrate web or sleeve; providing a source of the TPU or an alloy thereof in molten form including a void-producing material; extruding the TPU or alloy thereof over substantially the entire surface of the base substrate or sleeve to form a compressible layer thereon; and providing a printing surface layer over the compressible layer.

The void-producing material is selected from the group consisting of pre-expanded microspheres, unexpanded microspheres, and blowing agents. Alternatively, the voids may be created by incorporating a leachable material that is subsequently removed after formation of the layer or by whipping air into the thermoplastic polymer while it is in a molten state.

In one embodiment of the method, the void-producing material comprises unexpanded microspheres, and the method of extruding the TPU further comprises expanding the microspheres. In an alternative embodiment, the void-producing material comprises unexpanded microspheres, wherein the microspheres are expanded by heating after extrusion of the compressible layer. In another embodiment of the invention, a method of making a printing blanket or sleeve including a compressible layer is provided comprising providing a base layer comprising a substrate web or sleeve; applying a compressible layer comprising a thermoplastic polymer or thermoplastic polymer alloy to the substrate web or sleeve; and providing a printing surface layer over the compressible layer. In this embodiment, the compressible layer may be in the form of a film or sheet which is laminated to the base layer. The base layer may comprise a fabric, metal, polymer, or a thermoplastic polymer or thermoplastic polymer alloy. The printing surface layer may comprise a rubber, the TPU, or an alloy of the TPU.

In still another embodiment of the invention, the method of making a printing blanket or sleeve comprises providing a base layer comprising a substrate web or sleeve and providing a printing surface layer over the base layer; where the base layer and the printing surface layer comprise the TPU or an alloy of the TPU. Accordingly, it is a feature of embodiments of the present invention to provide a printing blanket or sleeve in which at least one of the base layer, compressible layer, or printing surface layer is formed from a thermoplastic polymer or thermoplastic polymer alloy.

The properties of the TPUs give them a distinct processing advantage for use as layers in a printing blanket or sleeve construction. The use of these TPU alloys provides flexibility in designing a printing blanket or sleeve having the desired properties for use in offset printing. Further, the TPUs do not require the use of solvents in processing, which saves time, cost, and effort in adding, drying, and recovering solvents in addition to initial purchase of the solvents. Furthermore, the TPUs do not require curing like traditional rubber materials used in blanket constructions, affording additional process time and energy savings. These TPUs also provide an advantage in that they are easily colorable and recyclable. Further, these TPUs maintain their elastomeric behavior over a wide temperature range, and they have a high rebound ability and improved cohesive strength, resulting in longer life for the printing blanket or sleeve in which they are incorporated.

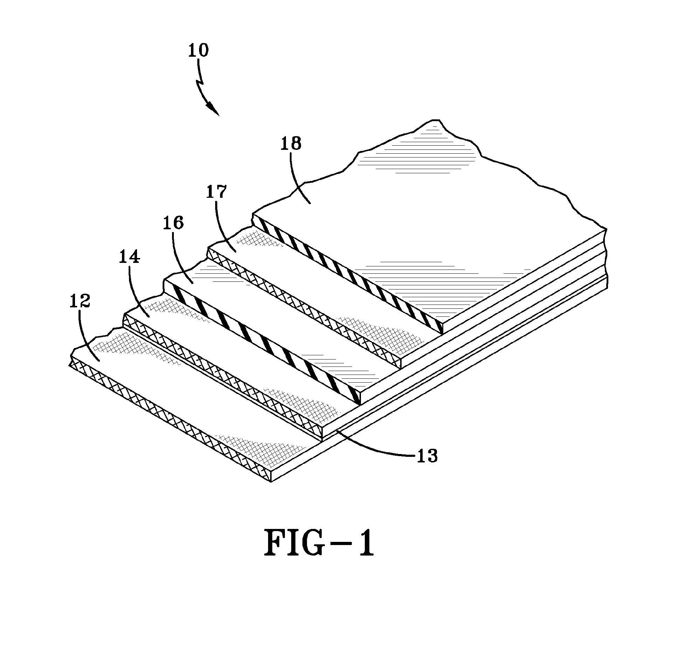

Referring now to FIG. 1, one embodiment of the invention is shown in the form of a printing blanket 10. It will be appreciated that the layers as shown in the blanket construction are also applicable to a sleeve construction. The printing blanket 10 is shown comprising a base layer 12, a compressible layer 15, and a printing surface layer 18. The blanket optionally may include additional layers such as, for example, fabric reinforcing ply or layer 14 and image reinforcing ply or layer 17. The various blanket plies or layers may be secured to one another using a suitable adhesive 13. In the embodiment shown, base layer 12 comprises a fabric layer. It should be appreciated that more than one base layer may be included in the construction. In this embodiment, the printing surface layer 18 comprises the TPU or an alloy of the TPU but may alternatively comprise a polymeric rubber material.

The base layer may alternatively be comprised of the TPU or an alloy of the TPU which provides support when the printing blanket is placed under tension. Where the printing blanket is tensioned, the base layer should have a coefficient of friction which facilitates even tensioning of the blanket around a printing cylinder. This may be achieved with the use of the TPU, an alloy of the TPU, the TPU reinforced with fibers, or a composite of the TPU with a textile fabric. Where the printing blanket is non-tensioned, a metal base layer may be used, or any of the above TPU materials may be used as long as they provide the desired frictional properties.

The compressible layer 15 can be comprised of the TPU and/or an alloy of the TPU. The TPU or an alloy of the TPU can be formed into compressible layers by introducing voids within the TPU material. These voids may be induced by using techniques that include the incorporation of pre-expanded microspheres, unexpanded microspheres that expand with the thermal processing of the starting material, or the use of endothermic or exothermic blowing agents. Other suitable techniques include the incorporation and subsequent removal of leachable additives, mechanical whipping of the material, and/or the incorporation of low-boiling liquid additives.

The ability to control void gauge and percentage void content varies, depending on the method in which the voids are introduced. The use of microspheres is preferred for introducing voids into the TPU. Microspheres can be incorporated into the TPU compound prior to TPU pellet formation or as an additive during thermal processing such as extrusion as explained below.

When using pre-expanded microspheres, care must be taken so that the voids are not destroyed by thermal processing that relies on shear, such as extrusion. The use of unexpanded microspheres is preferred for use in the present invention. Such microspheres expand with heat and can be added during extrusion and expanded as the TPU mixture exits an extrusion die as described below or subsequent to extrusion with the application of additional heat. Void gauge is controlled by the proper application of heat, the rate of cooling, and the pressure applied to the layer during layer formation and/or lamination. Percentage void content for either pre-expanded or unexpanded microspheres is a function of void gauge, the number of spheres added, and their uniform distribution within the compressible layer.

The TPU compressible layer is preferably produced using unexpanded microspheres dispersed in, for example, ethylene vinyl acetate, and a thermoplastic polymer having a Shore A hardness of from about 55 to 70. Suitable methods of incorporating microspheres in a TPU are disclosed in European Patent Applications EP 1 174 459 A1 and EP 1 233 037 A2, and PCT applications WO 01/10950, and WO 00/44821.

Where the TPU compressible layer is produced using expanded microspheres, the temperature of the TPU during the application process should be kept below the expansion temperature of the microspheres so that the amount of expansion will remain constant during the processing of the compressible layer. Where the TPU compressible layer is produced using unexpanded microspheres, the TPU may be heated just to or slightly above the expansion temperature of the TPU during extrusion such that the expansion occurs at or near the exit of the extrusion die. The still soft TPU is then passed through a calibrating nip to achieve the desired gauge. Alternatively, the temperature of the TPU may be kept below the expansion temperature of the microspheres during the extrusion process and subsequently brought just to or slightly above the expansion temperature of the microspheres. In this case, the softening point of the TPU should be matched relatively closely to the expansion temperature of the microspheres so that it can deform to accommodate the expansion. One method of raising the temperature of the TPU to the expansion temperature of the microspheres is to pass the extruded TPU film containing the unexpanded microspheres through a heated nip or series of heated nips so that the temperature of the composite is gradually raised to the expansion temperature of the microspheres and expansion occurs under pressure to control the total gauge of the compressible layer. This temperature exceeds the temperature reached during compounding and extrusion, allowing the material to soften and the microspheres to expand under pressure, controlling the amount of expansion. Alternatively, endothermic and/or exothermic blowing agents may be introduced into the TPU material during initial compounding/manufacturing of the TPU and prior to TPU pellet formation or, preferably, during thermal processing. Blowing agents decompose when their activation temperature is reached and release gas upon decomposition. Endothermic blowing agents absorb energy during decomposition and tend to release less gas than exothermic agents, approximately 110 ml/g. Such blowing agents are useful in producing finer and more homogeneous foams.

Exothermic blowing agents emit energy during decomposition and tend to release more gas than endothermic agents, approximately 220 ml/g. They are useful in producing foams with larger void gauge. The void gauge and percentage void content is dependent on the amount and type of blowing agent, heat, the rate of cooling, and the pressure applied to the layer during layer formation and lamination.

Leachable additives such as various salts, sugars, or other selectively soluble materials can also be added to the TPU in the compounding stage or during thermal processing. Once the leachable additives are incorporated, voids will not be induced until the TPU layer is formed. At this point, the TPU layer must be brought into contact with an appropriate solvent that will dissolve or leach out the additives without degrading the layer. With the additives thus removed, voids remain in the layer. The gauge of these voids is determined by the gauge of the particulate additive selected, while the percentage void content is a function of the quantity and distribution of the additive and degree of removal.

Mechanical whipping of the molten TPU can also be employed to introduce voids with the layer. For example, when the TPU has been melted by thermal processing by extrusion or other means, the TPU can be agitated by mechanical means such that air or other gases are incorporated. Such mechanical means can include stirring, beating, whipping, or any other mechanical process in which air or other gases are forcibly mixed into the molten material. Alternatively, air or other gases may be injected into the molten TPU and mixed to disperse the air/gas evenly throughout. The whipped/mixed material can then be formed into an appropriate layer. Void gauge and percentage void content is mechanically controlled by the severity of the whipping/mixing process, the amount of air or gas introduced, and by the geometry of whipping/mixing equipment such as agitators, screws, and paddles.

Low-boiling liquid additives such as fluorocarbons or chlorocarbons can also be incorporated during thermal processing of the TPU. However, selection of the liquid and thermal processing parameters must be done with care so that the liquid is intermixed well within the TPU prior to boiling. When the boiling occurs, voids are formed within the material that will be retained when the TPU material cools during layer formation. The void gauge and percentage void content are determined by the amount and type of liquid added, the balance of heat and cooling, and the pressure applied to the layer during formation and lamination.

While the compressible layer has been described herein as comprising a TPU layer, it should also be appreciated that the compressible layer, in certain blanket/sleeve constructions, may comprise a polymeric rubber layer. Such a compressible polymeric rubber layer may be incorporated with voids as described above. The compressible layer preferably has a thickness of from about 0.006 inches to about 0.100 inches (about 0.15 mm to 2.54 mm), and more preferably, from about 0.010 inches to about 0.060 inches (about 0.25 mm to 1.5 mm).

The base layer is typically about 0.010 inches to about 0.026 inches (about 0.25 mm to 0.66 mm) thick, and the printing surface layer is typically between about 0.010 inches to 0.025 inches (about 0.25 mm to 0.64 mm) thick. However, it should be appreciated that the thickness of the base layer and printing surface layer may vary, depending on the materials selected for the layers and the desired finished blanket/sleeve properties.

In the preferred method of making a printing blanket or sleeve including the thermoplastic polymer compressible layer 15, a base layer 12 is provided on a printing blanket or sleeve, and the thermoplastic polymer compressible layer is either extruded or calendered in molten form or is laminated to the base layer with the use of heat and/or adhesives. The printing surface layer 18 may be applied to the compressible layer 15 by adhesive bonding, heat lamination, or direct extrusion or calendering.

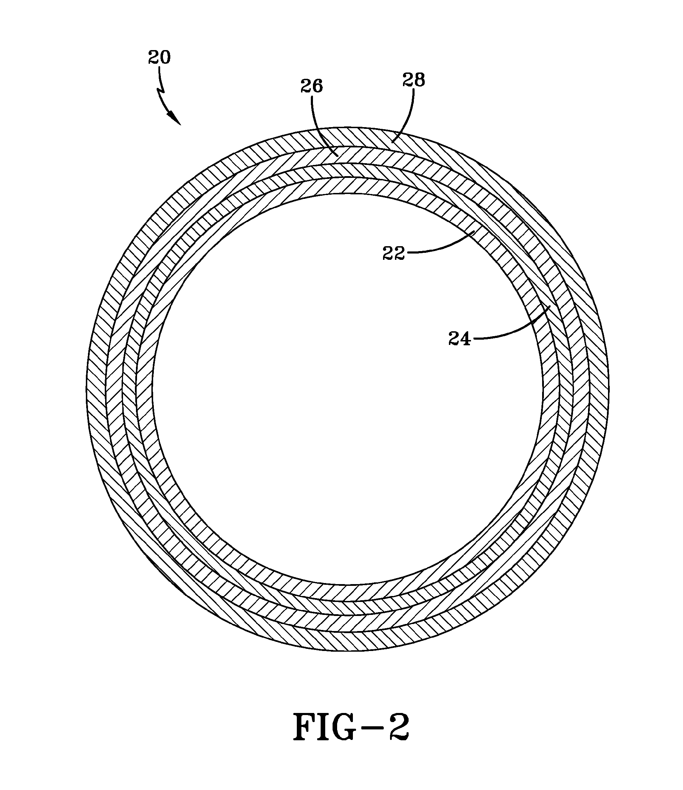

FIG. 2 illustrates another embodiment of the invention in the form of a printing sleeve 20 in which all of the layers in the sleeve have been formed from a thermoplastic polymer or a thermoplastic polymer alloy. It will be appreciated that the layers as shown in the sleeve construction are also applicable to a blanket construction. As shown, the sleeve includes base layer 22, an optional compressible layer 24, an optional image reinforcement layer 26, and a printing surface layer 28.

The base layer 22 is comprised of a low elongation, high tensile strength TBC and/or TBC alloy as described above. The optional image reinforcement layer 26 is positioned beneath the printing surface layer 28 and preferably comprises a hard TPU alloy, which functions to stabilize the printing surface layer 28 and protect the underlying compressible layer 24, when present. The thickness, hardness and elongation of the image reinforcement layer may be modified as desired by the selection of the TPU materials to provide a means of adjusting and varying the feed rate of the product as needed for the particular printing press design. This provides an improvement over textile materials which have previously been used as image reinforcement layers.

The image reinforcement layer preferably has a Shore A hardness ranging from 70 to 95, and more preferably, from about 80 to 90. The TPU material is preferably blended with other polymers or other suitable processing aids to reduce tack and aid in processing.

In the embodiment shown in FIG. 2, printing surface layer 28 comprises a relatively soft and non-plasticized TPU and/or TPU alloy. Suitable TPU alloys include nitrile rubber, isobutylene-isoprene, polysulfide rubber, EPDM terpolymer, natural rubber, and styrene butadiene rubber. The alloys may further include fillers and/or surface treatments.

The printing surface layer is comprised of a TPU/nitrile rubber alloy and a mineral additive such as talc. The talc is preferably included at a loading of between about 1% and 35% and functions as an aid during the mechanical surface finishing (grinding) process, i.e., it functions to reduce frictional heat build-up during grinding.

The printing surface layer preferably exhibits a Bashore rebound of less than 40%, and an average surface roughness of less than about 0.5 microns. By "Bashore rebound," it is meant the vertical rebound of the layer is measured pursuant to ASTM 2632.

The desired characteristics of the printing surface profile can be provided by thermal forming either before or after applying the TPU or TPU alloy material onto the blanket/sleeve composite. Alternatively, the desired surface profile can be mechanically imparted by abrasion/grinding, or chemically etching or leaching after application of the TPU material to the blanket/sleeve composite.

In embodiments where each of the base layer, optional compressible layer, optional image reinforcement layer, and printing surface layer are comprised of TPU or TPU alloys, such layers may be provided in the form of free or supported films. The layers may be adhered to adjacent layer(s) of the blanket construction by bonding methods well known in the art, or by heat lamination or direct extrusion onto the blanket construction. The layers may also be extrusion-laminated or slot-die coated to adjacent layers, or may be co-extruded with adjacent layers. It should be appreciated that the layers may also be adhered with the use of conventional adhesives. Alternatively, the TPU materials comprising the layers may be softened by the application of heat such that they function as adhesives.

In the practice of this invention, fabric layers may be incorporated into the construction as long as the blanket or sleeve edges are sealed and/or the fabric is sufficiently impregnated with a suitable TPU material to prevent wicking of solvents/chemicals. Where the printing blanket or sleeve layers are comprised primarily of TPU or TPU alloys, edge sealing is readily achieved by heating the exposed edges of the blanket, allowing the thermoplastic material to soften and flow together. Alternatively, additional TPU or TPU alloy may be added with heat to the exposed edges. The added TPU or TPU alloy will bond readily to the blanket cross-section due to its thermoplastic nature.

Where one or more fabric layers are used as a reinforcing layer (for example, as shown in FIG. 1), the preferred fabric exhibits an elongation of about 4 to 16% and a minimum tensile strength of 60 pounds per inch (27.21 kg per cm). The edges of the fabric layers may be sealed with a TPU material or impregnated with TPU or a TPU alloy as described above such that the desired properties are maintained and the fabric no longer retains significant wicking properties.

In embodiments where the blanket or sleeve includes a compressible layer comprised of a TPU or TPU alloy foam, the blanket or sleeve should preferably exhibit a static compressibility of about 0.14 to 0.22 mm at 1060 kPA, or about 0.21 to 0.29 mm at 2060 kPa. The blanket or sleeve including the compressible layer should also exhibit a dynamic gauge loss of less than about 0.025 mm. The blanket or sleeve should also exhibit solvent/swelling resistance. Preferably, in distilled water, the blanket or sleeve should exhibit a volume swell of less than 2.5%; in 3.125% fountain solution, less than 3.0%; in 10% fountain solution, less than 3.5%; and in blanket wash, less than 2.0%.

This invention is illustrated by the following examples that are merely for the purpose of illustration and are not to be regarded as limiting the scope of the invention or the manner in which it can be practiced. Unless specifically indicated otherwise, parts and percentages are given by weight.

### Examples 1-4

In this experiment a series of TPU polymers were synthesized using the same general procedure. The procedure used involved heating a blend of polyol and chain extender, and diisocyanate separately to the temperatures specified in Table 1 and then mixing the ingredients. The viscosity of the reaction mixture was observed to significantly increase reactions in about 0.5 to 3 minutes at during which time the reaction vessel was emptied and the polymerizate was allowed to slowly cool to room temperature. The components utilized in synthesizing this series of TPUs are reported in Table 1.

The TPUs were aged in a naphthenic solvent at 23°C for 7 days after which time the tensile strength and elongation were again tested. The compression set of the TPUs made were also measured after being compressed at 25% at 23°C for 22 hours. The physical characteristics of the synthesized TPUs are reported in Table 2.

**Table 1**

| Example | 1 | 2 | 3 | 4 |
|---|---|---|---|---|
| Diethylene Glycol Adipate Parts by wt. | 189.50 | 189.50 | 189.50 | 189.50 |
| Dibutyl tin dilaurate Parts by wt. | 0.015 | 0.015 | 0.015 | 0.015 |
| HQEE Parts by wt. | 10.50 | 10.50 | 15.84 | 15.84 |
| MDI Parts by wt. | 36.82 | 37.10 | 43.54 | 43.87 |
| Polyol blend temperature | 170°C | 170°C | 170°C | 170°C |
| MDI temperature | 120°C | 120°C | 120°C | 120°C |
| Polyol Molecular Weight (Mn) | 2000 | 2000 | 2000 | 2000 |
| HQEE Molecular Weight | 198 | 198 | 198 | 198 |
| MDI Molecular Weight | 250.4 | 250.4 | 250.4 | 250.4 |
| % Urethane Segment | 22.02 | 13.3 | 20.8 | 25.4 |
| Stoichiometry | 99.45% | 99.99% | 97.12% | 97.81% |

As can been seen from reviewing Table 2 the TPUs retained high levels of tensile strength after and elongation after being exposed to the naphthenic solvent for 7 days at 23°C. The TPUs made in this series of experiments also exhibited low levels of compression set and volume swell. Accordingly this TPU exhibit an excellent combination of properties for utilization in manufacturing printing blankets.

**Table 2**

| | | | | |
|---|---|---|---|---|
| Melt Index (177°C/2160 g)* | 24.00 | 4.00 | 19.00 | 12.00 |
| GPC Weight Average Molecular Weight | 132,000 | 87,000 | 86,000 | 96,000 |
| GPC Number Average Molecular Weight | 58,000 | 41,000 | 42,000 | 46,000 |
| Glass Transition Temperature | -24°C | -23°C | -21°C | -20°C |
| Shore A Hardness (ASTM D2240) | 58 | 61 | 64 | 68 |
| Crystallization Temperature | 81°C | | 56°C | 65°C |
| Melting Temperature | 136°C | 140°C | 160°C | 161°C |
| Original Tensile Strength (psi) | 670 | 1400 | 900 | 1500 |
| Solvent Aged Tensile Strength (psi) | 630 | 1400 | 890 | 1400 |
| Tensile Strength Retention After Solvent Aging | 94% | 100% | 99% | 93% |
| Tensile Elongation | 760% | 800% | 620% | 770% |
| Solvent Aged Tensile Elongation | 610% | 790% | 570% | 680% |
| Tensile Elongation After Solvent Aging | 80% | 99% | 92% | 82% |
| Volume Swell | 3.5% | 2.0% | 3.7% | -1.5% |
| Compression Set (23°C, 22 hours/25%) | 2% | 12% | 14% | 17% |

| | | | | |
|---|---|---|---|---|
| * Melt Index values are reported in g/10 minutes | | | | |

While certain representative embodiments and details have been shown for the purpose of illustrating the subject invention, it will be apparent to those skilled in this art that various changes and modifications can be made therein without departing from the scope of the subject invention.

## Claims

1. A printing blanket comprising: a base layer; a compressible layer, and a printing surface layer, wherein the compressible layer and/or the printing surface layer is comprised of a thermoplastic polyurethane composition, wherein the thermoplastic polyurethane composition is made by reacting (a) at least one polyester polyol intermediate with (b) at least one diisocyanate and (c) at least one chain extender; **characterised in that** the polyester polyol intermediate comprises an intermediate derived from at least one dialkylene glycol and at least one dicarboxylic acid or an ester or anhydride thereof.

2. The printing blanket of claim 1, wherein the dicarboxylic acid contains from 4 to 15 carbon atoms and the dialkylene glycol contains from 2 to 8 carbon atoms.

3. The printing blanket of claim 1, wherein the dicarboxylic acid is selected from the group consisting of succinic acid, glutaric acid, adipic acid, pimelic acid, suberic acid, azelaic acid, sebacic acid, dodecanedioic acid, isophthalic acid, terephthalic acid, cyclohexane dicarboxylic acid, or combinations thereof; and wherein the dialkylene glycol comprises: oxydimethanol, diethylene glycol, dipropylene glycol, 3,3-oxydipropan-1-ol, and dibutylene glycol.

4. The printing blanket of claim 1, wherein the diisocyanate is selected from the group consisting of 4,4'-methylenebis-(phenyl isocyanate), hexamethylene diisocyanate, 3,3'-dimethylbiphenyl-4,4'-diisocyanate, m-xylylene diisocyanate, phenylene-1,4-diisocyanate, naphthalene-1,5-diisocyanate, diphenylmethane-3,3'-dimethoxy-4,4'-diisocyanate, toluene diisocyanate; isophorone diisocyanate, 1,4-cyclohexyl diisocyanate, decane-1,10-diisocyanate, and dicyclohexylmethane-4,4'-diisocyanate; and wherein the chain extender is selected from the group consisting of ethylene glycol, diethylene glycol, propylene glycol, dipropylene glycol, 1,4-butanediol, 1,6-hexanediol, 1,3-butanediol; 1,5-pentanediol, 1,4-cyclohexane-dimethanol, hydroquinone bis(beta-hydroxyethyl)ether, 1,3-di(2-hydroxyethyl)benzene, bisphenol ethoxylates and 1,2-di(2-hydroxyethoxy)benzene.

5. The printing blanket of claim 1, wherein is the polyester polyol intermediate is comprised of poly(diethylene glycol adipate); wherein the diisocyanate comprises 4,4'-methylenebis-(phenyl isocyanate); and wherein the chain extender is selected from the group consisting of hydroquinone, resorcinol, bisphenol ethoxylates and catechol.

6. The printing blanket of claim 1, wherein the chain extender is an aromatic glycol.

7. The printing blanket of claim 1, wherein the polyester polyol component is substantially free of polyether polyols.

8. The printing blanket as specified in claim 1, wherein the printing surface layer is comprised of the thermoplastic polyurethane composition.

9. The printing blanket of claim 8, wherein said printing surface comprises an alloy of the thermoplastic polyurethane composition with a polymeric material selected from the group consisting of nitrile rubber, polyvinylchloride and thermoplastic elastomers.

10. The printing blanket as specified in claim 8, wherein the base layer is comprised of a material selected from the group consisting of fabrics, metals, and polymeric materials.

11. The printing blanket of claim 10, wherein the compressible layer is comprised of a rubber.

12. The printing blanket of claim 10, wherein the compressible layer is positioned between said base layer and said printing surface layer.

13. The printing blanket of claim 12, wherein the printing blanket is further comprised of an image reinforcement layer which is positioned below the printing surface layer, and wherein the image reinforcement layer is comprised of the thermoplastic block copolymer and a fabric.

14. The printing blanket of claim 13, wherein the image reinforcement layer has a Shore A hardness which is greater than the Shore A hardness of the printing surface layer preferably wherein the image reinforcement layer has a Shore A hardness which is within the range of 55 to 95.

15. The printing blanket of claim 1, which further comprises a reinforcing fabric layer which is positioned below said printing surface layer.

16. The printing blanket of claim 8, wherein said printing surface layer comprises an alloy of the thermoplastic polyurethane composition with a polymeric material selected from the group consisting of copolyesters and copolyamides, or wherein said printing surface comprises an alloy of the thermoplastic polyurethane composition with an additional thermoplastic polyurethane.

17. The printing blanket of claim 1, wherein the polyester polyol intermediate is the reaction product of a mixture of one or more dialkylene glycol and one or more monoalkyl glycol with the dicarboxylic acid or an anhydride or ester of the dicarboxylic acid, or wherein the polyester polyol intermediate includes an additional polyester polyol intermediate which is substantially free of ether linkages.

## Patentansprüche

1. Drucktuch, umfassend: eine Grundschicht, eine komprimierbare Schicht und eine Druckoberflächenschicht, wobei die komprimierbare Schicht und/oder die Druckoberflächenschicht aus einer thermoplastischen Polyurethanzusammensetzung besteht, wobei die thermoplastische Polyurethanzusammensetzung hergestellt wird durch Umsetzen von (a) wenigstens einer Polyesterpolyol-Zwischenstufe mit (b) wenigstens einem Diisocyanat und (c) wenigstens einem Kettenverlängerer, **dadurch gekennzeichnet, dass** die Polyesterpolyol-Zwischenstufe eine Zwischenstufe umfasst, die von wenigstens einem Dialkylenglycol und wenigstens einer Dicarbonsäure oder einem Ester oder Anhydrid davon abgeleitet ist.

2. Drucktuch gemäß Anspruch 1, wobei die Dicarbonsäure 4 bis 15 Kohlenstoffatome enthält und das Dialkylenglycol 2 bis 8 Kohlenstoffatome enthält.

3. Drucktuch gemäß Anspruch 1, wobei die Dicarbonsäure aus der Gruppe ausgewählt ist, die aus Bernsteinsäure, Glutarsäure, Adipinsäure, Pimelinsäure, Korksäure, Azelainsäure, Sebacinsäure, Dodecandisäure, Isophthalsäure, Terephthalsäure, Cyclohexandicarbonsäure oder Kombinationen davon besteht, und wobei das Dialkylenglycol Oxydimethanol, Diethylenglycol, Dipropylenglycol, 3,3-Oxydipropan-1-ol und Dibutylenglycol umfasst.

4. Drucktuch gemäß Anspruch 1, wobei das Diisocyanat aus der Gruppe ausgewählt ist, die aus 4,4'-Methylenbis(phenylisocyanat), Hexamethylendiisocyanat, 3,3'-Dimethylbiphenyl-4,4'-diisocyanat, m-Xylylendiisocyanat, Phenylen-1,4-diisocyanat, Naphthalin-1,5-diisocyanat, Diphenylmethan-3,3'-dimethoxy-4,4'-diisocyanat, Toluoldiisocyanat, Isophorondiisocyanat, 1,4-Cyclohexyldiisocyanat, Decan-1,10-diisocyanat und Dicyclohexyl-methan-4,4'-diisocyanat besteht, und wobei der Kettenverlängerer aus der Gruppe ausgewählt ist, die aus Ethylenglycol, Diethylenglycol, Propylenglycol, Dipropylenglycol, 1,4-Butandiol, 1,6-Hexandiol, 1,3-Butandiol, 1,5-Pentandiol, 1,4-Cyclohexandimethanol, Hydrochinonbis(beta-hydroxyethyl)ether, 1,3-Di(2-hydroxyethyl)benzol, Bisphenolethoxylaten und 1,2-Di(2-hydroxyethoxy)benzol besteht.

5. Drucktuch gemäß Anspruch 1, wobei die Polyesterpolyol-Zwischenstufe aus Poly(diethylenglycoladipat) besteht, wobei das Diisocyanat 4,4'-Methylenbis(phenylisocyanat) umfasst und wobei der Kettenverlängerer aus der Gruppe ausgewählt ist, die aus Hydrochinon, Resorcin, Bisphenolethoxylaten und Brenzcatechin besteht.

6. Drucktuch gemäß Anspruch 1, wobei der Kettenverlängerer ein aromatisches Glycol ist.

7. Drucktuch gemäß Anspruch 1, wobei die Polyesterpolyolkomponente im Wesentlichen frei von Polyetherpolyolen ist.

8. Drucktuch gemäß Anspruch 1, wobei die Druckoberflächenschicht aus der thermoplastischen Polyurethanzusammensetzung besteht.

9. Drucktuch gemäß Anspruch 8, wobei die Druckoberfläche eine Legierung aus der thermoplastischen Polyurethanzusammensetzung mit einem polymeren Material, das aus der Gruppe ausgewählt ist, die aus Nitrilkautschuk, Polyvinylchlorid und thermoplastischen Elastomeren besteht, umfasst.

10. Drucktuch gemäß Anspruch 8, wobei die Grundschicht aus einem Material besteht, das aus der Gruppe ausgewählt ist, die aus Textilstoffen, Metallen und polymeren Materialien besteht.

11. Drucktuch gemäß Anspruch 10, wobei die komprimierbare Schicht aus einem Kautschuk besteht.

12. Drucktuch gemäß Anspruch 10, wobei sich die komprimierbare Schicht zwischen der Grundschicht und der Druckoberflächenschicht befindet.

13. Drucktuch gemäß Anspruch 12, wobei das Drucktuch weiterhin aus einer Bildverstärkungsschicht besteht, die sich unter der Druckoberflächenschicht befindet, und wobei die Bildverstärkungsschicht aus dem thermoplastischen Blockcopolymer und einem Textilstoff besteht.

14. Drucktuch gemäß Anspruch 13, wobei die Bildverstärkungsschicht eine Shore-A-Härte aufweist, die größer ist als die Shore-A-Härte der Druckoberflächenschicht, wobei die Bildverstärkungsschicht vorzugsweise eine Shore-A-Härte aufweist, die im Bereich von 55 bis 95 liegt.

15. Drucktuch gemäß Anspruch 1, das weiterhin eine verstärkende Textilschicht umfasst, die sich unter der Druckoberflächenschicht befindet.

16. Drucktuch gemäß Anspruch 8, wobei die Druckoberflächenschicht eine Legierung der thermoplastischen Polyurethanzusammensetzung mit einem polymeren Material, das aus der Gruppe ausgewählt ist, die aus Copolyestern und Copolyamiden besteht, umfasst oder wobei die Druckoberfläche eine Legierung der thermoplastischen Polyurethanzusammensetzung mit einem zusätzlichen thermoplastischen Polyurethan umfasst.

17. Drucktuch gemäß Anspruch 1, wobei die Polyesterpolyol-Zwischenstufe das Reaktionsprodukt eines Gemischs aus einem oder mehreren Dialkylenglycolen und einem oder mehreren Monoalkylglycolen mit der Dicarbonsäure oder einem Anhydrid oder Ester der Dicarbonsäure ist oder wobei die Polyesterpolyol-Zwischenstufe eine zusätzliche Polyesterpolyol-Zwischenstufe, die im Wesentlichen frei von Etherbindungen ist, umfasst.

## Revendications

1. Blanchet d'impression comprenant : une couche de base ; une couche compressible et une couche de surface d'impression, la couche compressible et/ou la couche de surface d'impression comprenant d'une composition de polyuréthane thermoplastique, la composition de polyuréthane thermoplastique étant préparée en faisant réagir (a) au moins un intermédiaire de polyol de polyester avec (b) au moins un diisocyanate et (c) au moins un allongeur de chaîne ; **caractérisé en ce que** l'intermédiaire de polyol de polyester comprend un intermédiaire dérivé d'au moins un dialkylène glycol et d'au moins un acide dicarboxylique ou d'un ester ou anhydride de celui-ci.

2. Blanchet d'impression selon la revendication 1, dans lequel l'acide dicarboxylique contient de 4 à 15 atomes de carbone et le dialkylène glycol contient de 2 à 8 atomes de carbone.

3. Blanchet d'impression selon la revendication 1, dans lequel l'acide dicarboxylique est choisi dans le groupe constitué d'acide succinique, d'acide glutarique, d'acide adipique, d'acide pimélique, d'acide subérique, d'acide azélaïque, d'acide sébacique, d'acide dodécanedioïque, d'acide isophtalique, d'acide téréphtalique, d'acide cyclohexane dicarboxylique ou de combinaisons de ceux-ci ; et dans lequel le dialkylène glycol comprend : l'oxydiméthanol, le diéthylène glycol, le dipropylène glycol, le 3,3-oxydipropan-1-ol et le dibutylène glycol.

4. Blanchet d'impression selon la revendication 1, dans lequel le diisocyanate est choisi dans le groupe constitué de 4,4'-méthylènebis-(isocyanate de phényle), de diisocyanate d'hexaméthylène, de 3,3'-diméthylbiphényl-4,4'-diisocyanate, de diisocyanate de m-xylylène, de phénylène-1,4-diisocyanate, de naphtalène-1,5-diisocyanate, de diphénylméthane-3,3'-diméthoxy-4,4'-diisocyanate, de diisocyanate de toluène ; de diisocyanate d'isophorone, de diisocyanate de 1,4-cyclohexyle, de décane-1,10-diisocyanate et de dicyclohexylméthane-4,4'-diisocyanate ; et dans lequel l'allongeur de chaîne est choisi dans le groupe constitué d'éthylène glycol, de diéthylène glycol, de propylène glycol, de dipropylène glycol, de 1,4-butanediol, de 1,6-hexanediol, de 1,3-butanediol, de 1,5-pentanediol, de 1,4-cyclohexane-diméthanol, de bis(bêta-hydroxyéthyl)éther d'hydroquinone, de 1,3-di(2-hydroxyéthy)benzène, d'éthoxylates de bisphénol et de 1,2-di(2-hydroxyéthoxy)benzène.

5. Blanchet d'impression selon la revendication 1, dans lequel l'intermédiaire polyol de polyester comprenant de poly(adipate de diéthylène glycol) ; dans lequel le diisocyanate comprend du 4,4'-méthylènebis-(isocyanate de phényle) ; et dans lequel l'allongeur de chaîne est choisi dans le groupe constitué d'hydroquinone, de résorcinol, d'éthoxylates de bisphénol et de catéchol.

6. Blanchet d'impression selon la revendication 1, dans lequel l'allongeur de chaîne est un glycol aromatique.

7. Blanchet d'impression selon la revendication 1, dans lequel le composant polyol de polyester est sensiblement exempt de polyols de polyéther.

8. Blanchet d'impression selon la revendication 1, dans lequel la couche de surface d'impression est constituée de la composition de polyuréthane thermoplastique.

9. Blanchet d'impression selon la revendication 8, dans lequel ladite surface d'impression comprend un alliage de la composition de polyuréthane thermoplastique avec un matériau polymère choisi dans le groupe constitué de caoutchouc de nitrile, de chlorure de polyvinyle et d'élastomères thermoplastiques.

10. Blanchet d'impression selon la revendication 8, dans lequel la couche de base comprend un matériau choisi dans le groupe constitué de tissus, métaux et matériaux polymères.

11. Blanchet d'impression selon la revendication 10, dans lequel la couche compressible comprend du caoutchouc.

12. Blanchet d'impression selon la revendication 10, dans lequel la couche compressible est positionnée entre ladite couche de base et ladite couche de surface d'impression.

13. Blanchet d'impression selon la revendication 12, le blanchet d'impression comprend en outre une couche de renforcement d'image qui est positionnée en dessous de la couche de surface d'impression, et dans lequel la couche de renforcement d'image comprend du copolymère séquencé thermoplastique et d'un tissu.

14. Blanchet d'impression selon la revendication 13, dans lequel la couche de renforcement d'image a une dureté Shore A qui est supérieure à la dureté Shore A de la couche de surface d'impression, la couche de renforcement d'image ayant de préférence une dureté Shore A qui est dans la plage de 55 à 95.

15. Blanchet d'impression selon la revendication 1, qui comprend en outre une couche de tissu de renforcement qui est positionnée en dessous de ladite couche de surface d'impression.

16. Blanchet d'impression selon la revendication 8, dans lequel ladite couche de surface d'impression comprend un alliage de la composition de polyuréthane thermoplastique avec un matériau polymère choisi dans le groupe constitué de copolyesters et de copolyamides, ou dans lequel ladite surface d'impression comprend un alliage de la composition de polyuréthane thermoplastique avec un polyuréthane thermoplastique supplémentaire.

17. Blanchet d'impression selon la revendication 1, dans lequel l'intermédiaire de polyol de polyester est le produit réactionnel d'un mélange d'un ou plusieurs dialkylène(s) glycol(s) et d'un ou plusieurs monoalkyle(s) glycol(s) avec l'acide dicarboxylique ou un anhydride ou ester de l'acide dicarboxylique, ou dans lequel l'intermédiaire de polyol de polyester inclut un autre intermédiaire de polyol de polyester sensiblement exempt de liaisons éthers.
